# EUROPEAN PATENT APPLICATION

(11) **EP 1 584 451 A1**
(43) Date of publication of application: **12.10.2005**
(21) Application number: 05102040.2
(22) Date of filing: 15.03.2005
(51) Int. Cl.: B29C 70/22, B29C 70/16, B29C 70/88

(54) **Fabrics, tows of continuous filaments and strands for forming layers of reinforcement for a composite element with a resin matrix**

(30) Priority: 29.03.2004 IT TO20040208
(71) Applicant: Alenia Aeronautica S.p.A., 80038 Pomigliano D'Arco (Napoli) (IT); G. ANGELONI S.r.l., 30174 MESTRE (Venezia) (IT)
(72) Inventor: Angeloni, Mario, 30174 Mestre (Venezia) (IT); Barbiso, Giovanni, 10070 Chialamberto (Torino) (IT)
(74) Representative: Fioravanti, Corrado

(57) **Abstract**

Fabrics, and/or strips or tows of parallel continuous fibres, and/or strands, and/or tubular braids including metal wires (M) mixed with and/or braided with organic and/or inorganic fibres are used to form the layers of reinforcement for a composite element with a resin matrix.

## Description

The present invention relates to fabrics, bands of filaments and strands for forming the reinforcement layers for a composite element with a resin matrix. The invention is intended to be applied in particular, though not exclusively, in the aviation industry, to the manufacture of composite structural elements, for constructing the fuselage of an aeroplane, for example. The invention could also be applied to advantage in other sectors of industry, in ship building or in road transport, for example, or in the manufacture of commonly used items, such as motorcycle helmets, as will be seen from the description which follows.

It is known that the cladding panels that form the upper portion of an aircraft fuselage can be constructed as rolled sections of so-called hybrid composite materials, known in the art as GLARE® or FML (fibre metal laminate), comprising a plurality of layers of metal, for example aluminium or a light alloy, with a plurality of interposed layers of fibres offering superior mechanical properties, for example glass fibres, impregnated with a structural adhesive, for example an epoxy resin. A laminated panel of this kind is disclosed, for example, in EP-A-0 649 373. Although FML panels already provide excellent mechanical qualities for a relatively low weight, the aviation industry is aiming at producing components able to offer the same properties while further reducing the overall weight of aircraft.

The aviation industry already makes wide use of composite structural elements, known as CFC or carbon fibre composites, having a matrix formed of a thermosetting or thermoplastic resin which serves as a binder for the reinforcement elements. These reinforcement elements usually consist of unidirectional fabrics or tapes constituted by strips of parallel continuous filaments, or tow, formed of carbon fibres. In some cases, carbon fibre sheets are used, made of both fabric and tapes which have been pre-impregnated with resin, cut to size, arranged one on top of the other in a moulding device, enclosed in a vacuum bag and then cured (thermosetting resin) or moulded (thermoplastic resin) in an autoclave using both temperature and pressure. In other cases, sheets are used which are manufactured using unidirectional fabric and tape, held together by stitching and not pre-impregnated; these are placed dry, one on top of the other in a mould; a measured quantity of resin is then placed in the vacuum bag and permeates the fibre sheets and cures in the autoclave. The latter method is known in the art as resin film infusion.

The aircraft construction industry is particularly sensitive to the problem of preventing the spreading of cracks formed as the result of an impact, for example by a tool, or by large hailstones. The aim is to prevent any cracks formed in the outermost layer or layers of the structural element from spreading inwardly to adjacent layers. A crack could lead to the layers of an FML panel becoming detached or delaminated.

It is desirable that any impacts of this order should leave traces that are easily detected by the naked eye, making it possible to intervene rapidly by repairing or replacing the damaged component. This requirement of course applies also to composite elements used in a variety of applications, in the manufacture of motorcycle helmets for example and, more generally, in any field where even an impact of a nondestructive magnitude on a composite element could compromise the reliability of a product and thereby the safety of objects and/or persons.

Neither FML nor CFC (carbon fibre composite) elements show any evidence of damage from impacts such as those mentioned above, with the result that when deciding on the thickness of an element one must take into account the fact that its integrity and performance must be preserved even if it is damaged. The result of this is that elements are often too thick, thereby adding to the weight of the aircraft.

In view of the above, the object of the present invention is to optimise the weight and mechanical strength of composite structural elements so as to overcome the problems described above in relation to the prior art and, in particular, to limit the spreading of cracks while making any damage caused by an impact clearly visible.

This and other objects and advantages, which will be better understood hereinbelow, are achieved according to the present invention by providing fabrics, continuous filament tapes and strands as defined in the appended Claims, characterized in that they include metal filaments mixed with and/or braided with and/or wound round by organic and/or inorganic fibres, in order to form the reinforcement layers of a composite element having a resin matrix.

A few preferred but non-limitative embodiments of the invention will now be described, with reference to the appended drawings, which illustrate schematically:
- Figure 1: a continuous weft tow,
- Figure 2: a fabric in which each single filament is cut at the desired length,
- Figure 3: a yarn made up of several strands of a different nature, according to the invention,
- Figure 4: a braided tubular fabric (braid).

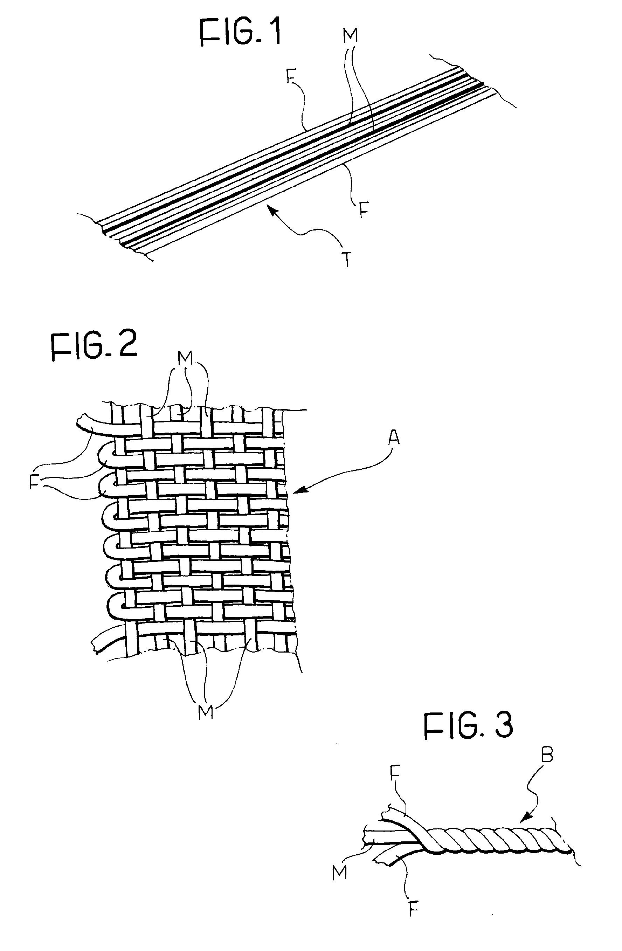

Figure 1 shows a strip (a so-called "tow") T of continuous parallel filaments, including metal wires M, organic and/or inorganic fibres F, preferably mixed in or distributed uniformly. The metal wires M are selected from light metals and alloys thereof, for example aluminium and titanium. The fibres F may include fibres of organic substances, for example carbon fibre or plant fibre (such as coconut fibre or jute), and inorganic fibres, such as glass or basalt fibres.

It is convenient if the filaments constituting the strip T are chosen and combined in dependence on the desired mechanical strength and weight of the composite structural element which is being produced, as well as on the costs involved and on the compatibility between the metal or alloy constituting the wires M and the substance constituting the fibres F. Metal wires M of titanium, for example, are suited to use with carbon fibres F, since carbon and titanium have the same electrochemical potential, thereby avoiding the risk of corrosion. Other optimum combinations include metal wires M of aluminium or alloys thereof, combined with fibres F of plant material, such as basalt or glass.

Figure 2 illustrates a sheet of fabric A produced by braiding metal wires M and organic and/or inorganic fibres F of types such as those described above. According to requirements, the metal wires M and the fibres F can be arranged interchangeably as the weft or the warp, or a combination of metal wires M and fibres F can be used as the weft and/or the warp.

As shown in Figure 3, the metal wires M and the fibres F can be combined to form strands B in which the fibres F are coiled around a core constituted by one or more metal wires M.

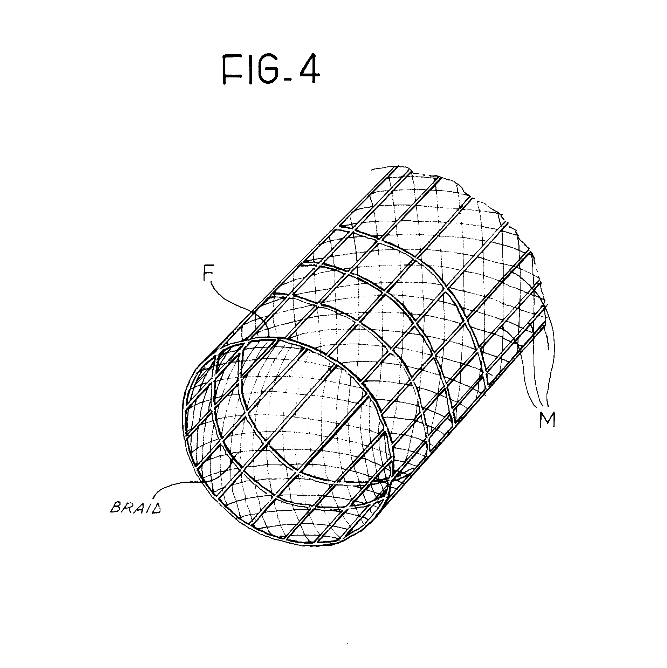

Figure 4 shows a fabric in the form of a tubular sleeve (known as a braid), obtained by braiding metal wires M and organic and/or inorganic fibres F of the types listed above. In dependence on requirements, the metal wires M and the fibres F can be arranged as the weft and/or the warp, even along different orientations, and vice-versa, or a combination of metal wires M and fibres F can be mixed and combined to form the weft and/or the warp.

The strips, the strands, the tubular elements and sheets of fabric described above are then used to form the layers of reinforcement for a composite structural element. The sheets or layers obtained can be pre-impregnated or infused with matrices of thermosetting or thermoplastic resin in order to produce composite elements with high degrees of mechanical strength along with high levels of toughness and other advantageous characteristics which will be described later. These layers could also be arranged with interposed layers of fabric of a conventional type.

The reinforcement provided by the intimate union of metal wires and organic and/or inorganic fibres gives the finished structural element advantageous mechanical characteristics (once the resin matrix has been cured) deriving from both reinforcing components (metal wires and fibres).

First of all, since the metal wires are intrinsically ductile, they are able to absorb impacts, being able to lengthen and deform plastically quite considerably. This means that any cracks which might form in the outermost surface layers as the result of an impact will not spread inwardly but will be limited to the very outermost layers. Further inwards at the site of the impact, the metal fibres in the next layers will stretch plastically progressively less towards the inner layers, without breaking.

Tests carried out by the Applicant showed that surface damage caused by the rupture of metal wires and fibres as a result of a concentrated and hard impact is far more apparent than in prior art composite materials such as those mentioned in the introduction to the present description. This makes it possible to carry out timely maintenance, repairing or replacing the damaged element. The structural element can be designed to the optimal dimensions, since there is no need to make it thicker than necessary, simply to ensure that it would perform effectively even in the event of an impact that caused damage not easily detected by visual inspection.

Structural elements obtained according to the present invention contain less metal overall than FML elements and are thus lighter. The decision to use plant fibres, which are very light, is also advantageous economically.

It is clear that the invention is not limited to the embodiments described and illustrated here, which should be considered non-limitative examples of the invention, shapes, dimensions and materials used may vary widely, without departing from the scope of the invention.

## Claims

1. A fabric for forming the reinforcement layers of a composite element with a resin matrix, **characterised in that** the fabric includes metal wires (M) mixed and/or braided with organic and/or inorganic fibres (F).

2. A fabric according to Claim 1, **characterised in that** the metal wires (M) are made of a light metal selected from a group including aluminium, titanium and alloys thereof.

3. A fabric according to Claim 1, **characterised in that** the fibres (F) are selected from a group including carbon fibres, plant fibres, polyester fibres, Kevlar fibres, glass fibres, basalt fibres and aramid fibres.

4. A strip or tow of parallel continuous fibres able to form the reinforcement layers of a composite element with a resin matrix, **characterised in that** the strip or tow includes at least one metal wire (M) mixed with organic and/or inorganic fibres (F).

5. A strip or tow according to Claim 4, **characterised in that** the metal wires (M) are formed of a light metal selected from a group including aluminium, titanium and of alloys thereof.

6. A strip or tow according to Claim 4, **characterised in that** the fibres (F) are selected from a group including carbon fibres, plant fibres, polyester fibres, Kevlar fibres, glass fibres, basalt fibres, aramid fibres.

7. A strand for forming a reinforcement layer of a composite element with a resin matrix, **characterised in that** the strand includes one or more metal wires (M) with organic and/or inorganic fibres (F) wound round it.

8. A strand according to Claim 7, **characterised in that** the metal wires (M) are formed of a light metal, selected from a group including aluminium, titanium and alloys thereof.

9. A strand according to Claim 7, **characterized in that** the fibres (F) are selected from a group including carbon fibres, plant fibres, polyester fibres, Kevlar fibres, glass fibres, basalt fibres, aramid fibres.

10. A tubular braid obtained by a method of continuous weaving at different orientations, for forming the tubular reinforcement layers of a composite element with a resin matrix, **characterised in that** the braid includes one or more metal wires (M) mixed and/or braided with organic and/or inorganic fibres (F).

11. A tubular braid according to Claim 10, **characterised in that** the metal wires (M) are made of a metal selected from a group including aluminium, titanium and alloys thereof.

12. A tubular braid according to Claim 10, **characterised in that** the fibres (F) are selected from a group including carbon fibres, plant fibres, polyester fibres, Kevlar fibres, glass fibres, basalt fibres and aramid fibres.

13. A composite structural element for an aircraft, including a resin matrix and reinforcement which includes a fabric and/or strip or tow and/or strand and/or tubular braid according to any of the preceding Claims.
